# EUROPÄISCHE PATENTSCHRIFT

(11) **EP 2 918 877 B1**
(45) Veröffentlichungstag und Bekanntmachung des Hinweises auf die Patenterteilung: **04.04.2018**
(21) Anmeldenummer: 15156640.3
(22) Anmeldetag: 26.02.2015
(51) Int. Cl.: F16H 63/20, F16H 61/32, F16H 63/08, F16H 63/30, F16H 61/28, F16H 63/02

(54) **Schaltanordnung für ein Kraftfahrzeuggetriebe und Schaltverfahren**
Switching assembly for a motor vehicle transmission and switching method
Agencement de commutation pour une boîte de vitesses de véhicule automobile et procédé de commutation

(30) Priorität: 14.03.2014 DE 102014103523
(43) Veröffentlichungstag der Anmeldung: 16.09.2015
(73) Patentinhaber: GETRAG B.V. & Co. KG, 74199 Untergruppenbach (DE)
(72) Erfinder: Bünder, Carsten, 70563 Stuttgart (DE)
(74) Vertreter: Witte, Weller & Partner Patentanwälte mbB

(56) Entgegenhaltungen:
- EP-A2- 1 614 940
- DE-A1-102009 046 345
- DE-A1-102009 050 151
- DE-B- 1 016 996
- FR-A- 763 768
- KR-A- 20100 064 419

## Beschreibung

Die vorliegende Erfindung betrifft eine Schaltanordnung für ein Kraftfahrzeuggetriebe, mit einem Gehäuse, das eine Längsachse definiert, mit einer Stange, die in Bezug auf das Gehäuse axial verschieblich gelagert ist und die mit einer Schaltkupplungsanordnung koppelbar ist, und mit einer Schaltwelle, die in Bezug auf das Gehäuse verdrehbar gelagert ist und die quer zu der Längsachse ausgerichtet ist, wobei die Schaltwelle mit der Stange mittels einer Mitnehmereinrichtung gekoppelt ist, derart, dass die Stange bei einer Verdrehung der Schaltwelle in einer ersten Drehrichtung in einer ersten Längsrichtung verschoben wird, wobei die Mitnehmereinrichtung eine Freilauf-Mitnehmereinrichtung ist, die so ausgebildet ist, dass die Stange bei einer Verdrehung der Schaltwelle in einer zweiten Drehrichtung von der Schaltwelle entkoppelt ist, wobei die Freilauf-Mitnehmereinrichtung einen Schaltnocken an der Schaltwelle und einen Nockenfolgerabschnitt an der Stange aufweist, wobei der Schaltnocken bei Verdrehung der Schaltwelle in der ersten Drehrichtung an dem Nockenfolgerabschnitt der Stange angreift, um diese in der ersten Längsrichtung zu versetzen.

Ferner betrifft die vorliegende Erfindung ein Verfahren zum Betätigen einer Schaltkupplungsanordnung eines Kraftfahrzeuggetriebes, insbesondere mittels einer Schaltanordnung der oben bezeichneten Art.

Auf dem Gebiet der Kraftfahrzeuggetriebe ist es bekannt, Gangstufen eines solchen Getriebes automatisiert ein- und auszulegen. Kraftfahrzeuggetriebe, die als Stufengetriebe in Vorgelegebauweise ausgebildet sind, beinhalten eine Mehrzahl von Schaltkupplungen, die den jeweiligen Gangstufen zugeordnet sind. Die Schaltkupplungen sind jeweils dazu ausgelegt, eine Welle des Getriebes mit einem der Gangstufe zugeordneten Losrad zu verbinden. Die Schaltkupplungen können bspw. als Synchron-Schaltkupplungen ausgebildet sein.

Ferner ist es bekannt, zwei derartiger Schaltkupplungen von benachbarten Losrädern in eine Schaltkupplungsanordnung zu integrieren, die mittels einer einzelnen Schaltmuffe betätigbar ist. In manchen Fällen kann eine Schaltkupplungsanordnung auch nur eine Schaltkupplung beinhalten.

Das Einlegen einer Zielgangstufe in einem solchen Kraftfahrzeuggetriebe beinhaltet demzufolge zunächst den Schritt, eine solche Schaltkupplungsanordnung anzuwählen (Wählbewegung), und anschließend eine Schaltmuffe einer solchen Schaltkupplungsanordnung axial zu versetzen (Schaltbewegung).

Um diese zwei Arten von Bewegungen zu realisieren, ist es bekannt, jeder Schaltkupplungsanordnung eine Schaltstange zuzuordnen. Hierbei wird ferner eine Schaltwelle vorgesehen, die einen Schaltfinger aufweist. Durch Verdrehen der Schaltwelle wird der Schaltfinger in eine Mitnehmerausnehmung von einer der Schaltwellen eingeführt (Wählbewegung). Durch axiales Versetzen der Schaltwelle wird die angewählte Schaltstange axial versetzt (Schaltbewegung). Dabei ist es auch bekannt, die Schaltwelle quer zu der Schaltstange anzuordnen. Hierbei erfolgt ein Wählvorgang durch ein axiales Versetzen der Schaltwelle, und ein Schaltvorgang erfolgt durch Verdrehen der Schaltwelle.

Für die Dreh- und die Axialbewegung der Schaltwelle ist eine aufwändige Aktuatorik erforderlich, die in der Regel zwei Aktuatormotoren beinhaltet.

Ferner ist es bekannt, zum Betätigen von Schaltkupplungsanordnungen sog. Schaltwalzen zu verwenden. Diese beinhalten an ihrem Außenumfang den Schaltkupplungsanordnungen zugeordnete Schaltkonturen, in die Mitnehmersteine eingreifen, die jeweils mit einer Schaltmuffe gekoppelt sind. Nachteilig ist es bei derartigen Schaltanordnungen, dass die Gangstufen nur rein sequentiell eingelegt werden können. Mehrfachschaltungen (Schaltungen über mehr als zwei Gangstufen hinweg) dauern folglich relativ lange, was als unkomfortabel empfunden wird. Vorteilhaft ist hingegen, dass eine Schaltwalze nur einen Antriebsmotor benötigt.

Auf dem Gebiet der Doppelkupplungsgetriebe ist es bekannt, jedem der Teilgetriebe eine eigene Schaltwalze mit einem eigenen Antrieb zuzuordnen. Durch diese Maßnahme können Mehrfachschaltungen in deutlich kürzerer Zeit ausgeführt werden. Allerdings sind wiederum zwei unabhängig voneinander ansteuerbare Aktuatormotoren für die jeweiligen Schaltwalzen erforderlich.

Bei Doppelkupplungsgetrieben, die eine Eingangswellenanordnung und zwei parallele Ausgangswellen aufweisen, an denen jeweils Gangstufen des einen wie des anderen Teilgetriebes angeordnet sind, sind hierbei zudem aufwändige Verbindungselemente (sog. Linkages) vorzusehen, die den Abstand zwischen einer Schaltwalze und einer entfernt liegenden Antriebswelle überbrücken.

Aus den älteren deutschen Anmeldungen DE102013104552 und DE102013018103, ist es ferner bekannt, anstelle von Schaltstangen sog. Schubstangen vorzusehen, von denen jeweils zwei so miteinander gekoppelt sind, dass sie zwangsweise gegensinnig in axialer Richtung verschiebbar sind. Nur eine der zwei Stangen ist dabei mir einer jeweiligen Schaltkupplungsanordnung gekoppelt. Die Schubbewegung erfolgt über einen Spindelantrieb mit einer Mutter, an der ein Schaltfinger zum axialen Versetzen jeweils einer Schubstange festgelegt ist.

Weiterhin ist aus der gattungsgemäßen EP 1 614 940 A2 eine Getriebeeinrichtung für ein Kraftfahrzeug bekannt, die eine Mehrzahl von Übersetzungsstufen bildenden Radsätzen aufweist, wobei Endausgangsmechanismen vorgesehen sind, und wobei zum Betätigen der Endausgangsmechanismen eine Betätigungseinrichtung vorgesehen ist, die zum Einwirken auf Endausgangsmechanismen für das Einlegen von Übersetzungsstufen mehrere antreibbare Hauptbetätigungselemente, insbesondere Schaltfinger, aufweist. Auf zumindest einen Endausgangsmechanismus kann wahlweise mittels eines ersten oder eines zweiten Hauptbetätigungselements eingewirkt werden, wobei dabei bei identischer Antriebsrichtung, insbesondere bei identischem Drehsinn, dieser beiden Hauptbetätigungselemente der Endausgangsmechanismus in Abhängigkeit des auf diesen Endausgangsmechanismus wirkenden Hauptbetätigungselements in einer von zwei verschiedenen, insbesondere entgegengesetzten, Richtungen bewegt wird.

Aus der DE 10 2009 046 345 A1 ist eine Schaltvorrichtung für ein Mehrgruppengetriebe bekannt, wobei das Mehrgruppengetriebe zumindest eine handschaltbare Hauptgruppe mit einer ungeraden Anzahl von Vorwärtsgängen und eine Bereichsgruppe zur Umschaltung zwischen zwei Gangbereichen aufweist. Damit das Mehrgruppengetriebe mit und ohne Bereichszuschaltung mit Hilfe eines logischen Schaltbildes geschaltet werden kann, ist ein Schaltfingersystem vorgesehen, bestehend aus Schaltfingern, die als Einzelschaltfinger mit jeweils einem Fingerelement und bedarfsweise als Doppelschaltfinger mit jeweils zwei in einer Ebene liegenden zueinander versetzt angeordneten Fingerelementen ausgebildet sind sowie mit zugehörigen Mitnehmern, welche entsprechende Aussparungen; zum Eingreifen der Einzelschaltfinger und gegebenenfalls der Doppelschaltfinger besitzen, über das die Mitnehmer wahlweise in zwei entgegengesetzte Schaltrichtungen betätigbar sind und/oder eine jeweilige Schaltrichtung umkehrbar ist, so dass die Gänge der beiden Gangbereiche in einem Mehrfach-H-Schaltbild aufeinanderfolgend mit alternierenden Schalthebelbewegungen schaltbar sind, wobei eine Umschaltung des Gangbereichs über eine Wählbewegung des Schalthebels ansteuerbar ist.

Vor dem obigen Hintergrund ist es eine Aufgabe der Erfindung, eine verbesserte Schaltanordnung für ein Kraftfahrzeuggetriebe sowie ein verbessertes Verfahren zum Betätigen einer Schaltkupplungsanordnung eines Kraftfahrzeuggetriebes anzugeben.

Die obige Aufgabe wird bei der eingangs genannten Schaltanordnung dadurch gelöst, dass der Nockenfolgerabschnitt beweglich in Bezug auf die Stange gelagert ist, derart, dass der Nockenfolgerabschnitt bei Verdrehung der Schaltwelle in der zweiten Drehrichtung von dem Schaltnocken bewegbar ist, ohne die Stange in axialer Richtung zu verschieben.

Der Nockenfolgerabschnitt ist folglich derart beweglich in Bezug auf die Stange gelagert, dass dieses bei einer Bewegung der Schaltwelle in der zweiten Drehrichtung eine Ausweichbewegung vollziehen kann, so dass der Schaltnocken vorzugsweise keinen Einfluss auf die Axialposition der Stange hat.

Ferner wird die obige Aufgabe gelöst durch ein Verfahren zum Betätigen einer Schaltkupplungsanordnung eines Kraftfahrzeuggetriebes, insbesondere mittels einer Schaltanordnung der erfindungsgemäßen Art, wobei die Schaltkupplungsanordnung mit einer axial verschieblichen Stange gekoppelt ist, wobei eine quer zu der Stange ausgerichtete Schaltwelle mittels eines Antriebsmotors in einer ersten und in einer zweiten Drehrichtung antreibbar ist und wobei an der Schaltwelle ein Schaltnocken ausgebildet ist, mit den Schritten, die Schaltkupplungsanordnung durch Verdrehen der Schaltwelle in der zweiten Drehrichtung anzuwählen, ohne hierbei die Stange axial zu versetzen, und die Schaltkupplungsanordnung zu schalten, indem die Schaltwelle in der ersten Drehrichtung verdreht wird, wobei der Schaltnocken die Stange in axialer Richtung verschiebt, um eine Gangstufe der Schaltkupplungsanordnung einzulegen.

Die erfindungsgemäße Schaltanordnung ermöglicht durch die Freilauf-Mitnehmereinrichtung, dass eine Schaltwelle in einer Drehrichtung zum Anwählen einer Schaltkupplungsanordnung verdreht wird, und in der entgegengesetzten Richtung zum Schalten der angewählten Schaltkupplungsanordnung verdreht wird. Daher ist es generell möglich, die Schaltanordnung mittels nur einem einzelnen Aktuatorantrieb zu realisieren, auch wenn es aus übergeordneten Gründen in manchen Ausführungsformen vorteilhaft sein kann, zwei Schaltwellen mit jeweiligem Aktuatormotor vorzusehen.

Der Aktuatormotor ist vorzugsweise ein Elektromotor, der die Schaltwelle bidirektional antreiben kann.

Ferner ermöglicht die erfindungsgemäße Schaltanordnung, Mehrfachschaltungen deutlich schneller durchzuführen. Da die Freilauf-Mitnehmereinrichtung für eine Entkopplung zwischen Schaltwelle und Stange sorgt, ist es bei Mehrfachrückschaltungen nicht notwendig, alle Zwischengangstufen einzulegen, wie es bei einer einzelnen Schaltwalze der Fall ist.

Zudem lässt sich die erfindungsgemäße Schaltanordnung mit geringem Bauraum realisieren,

Durch die Anordnung der Schaltwelle quer zu der axial verschieblichen Stange kann die Schaltanordnung auch bei Getrieben mit zwei Ausgangswellen ohne oder mit kleineren Überbrückungsgliedern ("Linkages") realisiert werden.

Vorzugsweise weist die Schaltanordnung eine Mehrzahl von Stangen auf, die parallel zueinander in Bezug auf das Gehäuse axial verschieblich gelagert sind und von denen vorzugsweise die Hälfte mit jeweiligen Schaltkupplungsanordnungen koppelbar sind. Die Schaltwelle kann in diesem Fall über eine entsprechende Mehrzahl von Freilauf-Mitnehmereinrichtungen mit den jeweiligen Stangen gekoppelt sein. Bei einer Verdrehung der Schaltwelle in der zweiten Drehrichtung ist es daher bevorzugt, wenn eine Entkopplung all dieser Stangen von der Schaltwelle realisiert ist. Die an der Schaltwelle vorgesehenen Mittel zur Bildung der Freilauf-Mitnehmereinrichtungen sind vorzugsweise über den Umfang der Schaltwelle verteilt angeordnet, so dass die Freilauf-Mitnehmereinrichtungen bei einer Verdrehung der Schaltwelle in der zweiten Drehrichtung nacheinander in Wirkung kommen, wobei sie für die jeweilige Entkopplung zwischen der Stange und der Schaltwelle sorgen.

Die Stangen sind vorzugsweise in einer Ebene parallel nebeneinander ausgerichtet.

Bei dieser Ausführungsform sind die Merkmale der Freilauf-Mitnehmereinrichtungen an der Schaltwelle in entsprechender Weise axial versetzt angeordnet.

Die Schaltanordnung kann fertigungs- und montagetechnisch einfach realisiert werden, da sie mit wenigen Bauteilen auskommt und vergleichsweise einfach in ein Getriebegehäuse integrierbar ist.

Die Aufgabe wird somit vollkommen gelöst.

Von besonderem Vorzug ist es, wenn die Schaltwelle mittels der Mitnehmereinrichtung die Stange ausschließlich in der ersten Längsrichtung verschieben kann, so dass die Stange als Schubstange ausgebildet ist.

Für diesen Fall ist es bevorzugt, wenn die Schaltanordnung eine Rückholeinrichtung aufweist, mittels der die Stange in der entgegengesetzten zweiten Längsrichtung verschiebbar ist.

Die Rückholeinrichtung kann auf verschiedene Art und Weise realisiert werden, bspw. unter Verwendung von Federn oder dergleichen.

Gemäß einer besonders bevorzugten Ausführungsform weist die Schaltanordnung eine weitere Stange auf, die in Bezug auf das Gehäuse axial verschieblich gelagert ist, wobei die Stange und die weitere Stange über eine Koppeleinrichtung miteinander gekoppelt sind, die so ausgebildet ist, dass die Stange und die weitere Stange zwangsweise gegensinnig in axialer Richtung verschiebbar sind.

Diese Ausführungsform ermöglicht es, die Stange und die weitere Stange jeweils als Schubstange auszubilden, die mittels jeweiliger Mitnehmereinrichtungen so mit der Schaltwelle gekoppelt sind, dass sie bei einer Verdrehung der Schaltwelle in der ersten Drehrichtung jeweils in der ersten Längsrichtung verschoben werden können. Ein Verschieben der Stange in der ersten Längsrichtung führt aufgrund der Koppeleinrichtung zwangsweise zu einem Verschieben der weiteren Stange in der zweiten Längsrichtung, und umgekehrt.

Es versteht sich, dass die Mitnehmereinrichtungen an der Schaltwelle so anzuordnen sind, dass ein gleichzeitiges Betätigen der Stange und der weiteren Stange zum Zwecke des Gangeinlegens ausgeschlossen ist.

Während im Stand der Technik sog. Schaltstangen jeweils einem Schaltkupplungspaket, also in der Regel zwei Gangstufen zugeordnet sind, ermöglicht die vorliegende Erfindung, jeder Gangstufe funktionell eine eigene Stange zuzuordnen. Wegen der Koppeleinrichtung, die für die zwangsweise gegensinnige Verschiebbarkeit sorgt, ist es dabei lediglich notwendig, eine der Stangen mit der Schaltkupplungsanordnung zu koppeln.

Von besonderem Vorzug ist es, wie erwähnt, wenn auch die weitere Stange über eine weitere Freilauf-Mitnehmereinrichtung mit der Schaltwelle gekoppelt ist.

Vorzugsweise ist für jede Schaltkupplungsanordnung, die zwei Gangstufen des Kraftfahrzeuggetriebes zugeordnet ist, jeweils ein Paar von Schubstangen vorgesehen, die jeweils eine Stange und eine weitere Stange beinhalten.

Erfindungsgemäß weist die Freilauf-Mitnehmereinrichtung einen Schaltnocken an der Schaltwelle und einen Nockenfolgerabschnitt an der Stange auf, wobei der Schaltnocken bei Verdrehung der Schaltwelle in der ersten Drehrichtung an dem Nockenfolgerabschnitt der Stange angreift, um diese in der ersten Längsrichtung zu versetzen.

Der Nockenfolgerabschnitt ist vorzugsweise in einem Endbereich der Stange vorgesehen, der der Schaltwelle zugewandt ist.

Die Freilauffunktion der Freilauf-Mitnehmereinrichtung kann auf verschiedene Art und Weise erfolgen, Zum einen ist es möglich, an der Stange ein Merkmal vorzusehen, das für die Freilaufeigenschaft vorgesehen ist, und/oder an der Schaltwelle ein Merkmal vorzusehen, das zu der Freilaufeigenschaft beiträgt.

Gemäß einer weiteren bevorzugten Ausführungsform ist der Schaltnocken beweglich an der Schaltwelle gelagert, derart, dass der Schaltnocken bei Verdrehung der Schaltwelle in der zweiten Drehrichtung insbesondere von der Stange bewegbar ist, ohne die Stange in axialer Richtung zu verschieben.

Bei dem beweglichen Nockenfolgerabschnitt ist es bevorzugt, wenn dieser verschwenkbar in Bezug auf die Stange ausgebildet ist, wobei die Verschwenkachse vorzugsweise parallel zu der Schaltwelle verläuft.

Ferner ist es hierbei bevorzugt, wenn die Stange bzw. deren Nockenfolgerabschnitt so innerhalb des Getriebes ausgerichtet sind, dass der Nockenfolgerabschnitt aufgrund von Gravitationskräften in eine Grundposition gelangt, bei der er mit der Stange ausgerichtet ist, so dass Schubkräfte von dem Schaltnocken über den Nockenfolgerabschnitt auf die Stangen übertragen werden können, wenn die Schaltwelle in der ersten Drehrichtung verdreht wird.

Bei dem beweglich gelagerten Schaltnocken ist es bevorzugt, wenn dieser mittels einer Feder in eine Nockenposition vorgespannt ist, wobei die Feder bei einem Verdrehen der Schaltwelle in der zweiten Drehrichtung von dem an der Stange angreifenden Schaltnocken komprimiert werden kann, so dass der Schaltnocken eine Ausweichbewegung vollziehen kann. Vorzugsweise erfolgt diese Ausweichbewegung in radialer Richtung.

In einer weiteren Ausgestaltung kann vorgesehen sein, dass der Nocken in Abhängigkeit von der Drehposition der Schaltwelle aktiv oder passiv so bewegt wird, dass er vor einem Einleiten einer Drehbewegung in der ersten Drehrichtung sicher wieder in die Nockenposition gelangt, bei der der Schaltnocken eine Schubbewegung auf die zugeordnete Stange ausüben kann.

Gemäß einer weiteren bevorzugten Ausführungsform ist die Schaltanordnung zur Betätigung von Gangstufen eines Doppelkupplungsgetriebes ausgelegt, wobei das Doppelkupplungsgetriebe zwei Teilgetriebe aufweist, wobei an der Schaltwelle wenigstens ein Neutralnocken ausgebildet ist, der in Bezug auf einen Schaltnocken der Schaltwelle so angeordnet ist, dass er, bei einem Verdrehen der Schaltwelle in der ersten Drehrichtung zum Einlegen einer Gangstufe eines Teilgetriebes, eine Stange, die einer anderen Gangstufe des gleichen Teilgetriebes zugeordnet ist, in eine Neutralposition versetzt.

Durch diese Maßnahme kann eine Schaltzeitverbesserung bei Schaltungen im gleichen Teilgetriebe erzielt werden. Insbesondere ist es bei Mehrfachschaltungen nicht notwendig, vor dem Einlegen einer Zielgangstufe in einem Teilgetriebe eine Quellgangstufe vorab durch Verschieben der der Quellgangstufe zugeordneten Stange mittels eines Schaltnockens auszulegen. Vielmehr kann bei einem Einlegevorgang der Zielgangstufe, bei dem ein Schaltnocken die der Zielgangstufe zugeordnete Stange in der ersten Längsrichtung versetzt, durch den Neutralnocken dafür gesorgt werden, dass wenigstens eine Gangstufe des gleichen Teilgetriebes ausgelegt werden.

Der Neutralnocken kann dabei radial kürzer als der Schaltnocken ausgebildet sein, so dass er bei der Schaltbewegung nach dem Erreichen der Neutralposition der Stange unter der Stange "durchtaucht", ohne diese weiter in Schaltrichtung (erster Längsrichtung) zu bewegen. Der Neutralnocken kann auch so breit sein, dass er sowohl die Gangschaltstange als auch die damit gekoppelte Schaltstange überstreicht. Sobald daher solch ein Neutralnocken bei der Schaltdrehrichtung entweder die Gangschaltstange oder die zugeordnete weitere Schaltstange erreicht, werden beide Stangen in Neutralstellung geschoben und der damit gerade eingelegte Gang ausgelegt. Da sich mit anderen Worten die korrespondierenden Stangen bei gleichzeitiger Betätigung durch den Neutralnocken aufeinander zu bewegen und sich in neutral treffen (müssen), ist sichergestellt, dass durch den Neutralnocken nicht versehentlich ein Gang eingelegt werden kann.

Wie bereits oben erwähnt, ist es von Vorteil, wenn die Schaltwelle von einem einzelnen Elektromotor angetrieben ist.

Die Schaltanordnung kann daher kostengünstig realisiert werden.

Die Drehposition der Schaltwelle kann bspw. durch einen Inkrementalsensor erfasst werden. Dabei ist es bevorzugt, wenn an der Schaltwelle wenigstens ein Referenzierungsmerkmal vorgesehen ist. In diesem Fall kann bspw. nach einem Reset eines Steuergerätes die Schaltwelle in der zweiten Drehrichtung bewegt werden, bis das Referenzierungsmerkmal angefahren ist, wodurch eine Referenzierung auf einfache Art und Weise durchgeführt werden kann, ohne zwischendurch zwangsweise Gangstufen einlegen zu müssen.

Das Referenzierungsmerkmal kann ein elektronisches Merkmal (Hall-Sensor oder dergleichen) sein, oder ein mechanisches Merkmal.

Gemäß einer weiteren bevorzugten Ausführungsform ist die Stange als Schubstange ausgebildet, wobei der Schaltnocken bei Verdrehen der Schaltwelle in der ersten Drehrichtung an einer axialen Stirnseite der Stange angreift.

Diese mechanische Ausgestaltung ermöglicht eine robuste Schubbetätigung der Stange zum Zwecke des Einlegens einer Gangstufe.

In einer Variante kann der Schaltnocken dabei beweglich an der Schaltwelle gelagert sein.

Gemäß einer bevorzugten Ausführungsform weist die Stange an einem Grundkörper einen Schaltkupplungs-Betätigungsabschnitt und einen in Bezug auf den Schaltkupplungs-Betätigungsabschnitt verschwenkbaren Abschnitt auf, wobei die axiale Stirnseite, an der der Schaltnocken angreifen kann, an dem verschwenkbaren Abschnitt ausgebildet ist.

Der verschwenkbare Abschnitt bildet bei dieser Ausführungsform den Nockenfolgerabschnitt für den Schaltnocken und ermöglicht es, dass der verschwenkbare Abschnitt bei einer Verdrehung der Schaltwelle in der zweiten Drehrichtung dem Schaltnocken ausweichen kann, so dass eine Freilauf-Mitnehmereinrichtung auf konstruktive einfache Art und Weise realisiert werden kann.

Bei einem Doppelkupplungsgetriebe können entweder sämtliche Gangstufen mittels einer einzelnen Schaltwelle bedient werden, wobei jeder Gangstufe vorzugsweise eine eigene Stange in Form einer Schubstange zugeordnet ist. Bei dieser Ausführungsform kann die Schaltwelle mittels eines einzelnen Antriebsmotors zum Schalten (in der ersten Drehrichtung) und zum Wählen (in der zweiten Drehrichtung) realisiert werden.

Alternativ ist es möglich, zwei Schaltwellen vorzusehen, die vorzugsweise jeweils die Gangstufen eines Teilgetriebes eines Doppelkupplungsgetriebes bedienen, wobei die zwei Schaltwellen in diesem Fall mittels jeweiliger eigener Antriebsmotoren angetrieben werden.

Die Schaltwelle weist vorzugsweise einen Schaltnocken für jede Schubstange auf. Die Schaltwelle ist so in Bezug auf die Stange bzw. die Stangen ausgerichtet, dass eine Achse der Schaltwelle quer, insbesondere senkrecht, zu der Erstreckung der Stange bzw. der Stangen ausgerichtet ist, insbesondere windschief hierzu.

In einer bevorzugten Variante befindet sich ein Nockenfolgerabschnitt der Stange zumindest in einer Neutralposition im Bereich eines Umkreises des Schaltnockens der Schaltwelle, so dass der Schaltnocken an einer axialen Stirnseite der Stange angreifen kann, um diese in der ersten Längsrichtung zu bewegen.

Mittels eines zusätzlichen Schubstangen-Paares kann ferner eine Parkby-Wire-Funktion im Wesentlichen ohne weiteren Zusatzaufwand dargestellt werden. Die Anzahl der Gangstufen des Kraftfahrzeuggetriebes liegt vorzugsweise in einem Bereich von zwei bis acht, insbesondere in einem Bereich von vier bis sieben, zuzüglich jeweils wenigstens einer Rückwärtsgangstufe.

Die Anordnung der Schaltnocken auf dem Umfang der Schaltwelle kann unter Berücksichtigung der Schaltstrategie dahingehend optimiert werden, dass möglichst wenige Bewegungen (Drehwinkel) zum Wählen (Bewegen in der zweiten Drehrichtung) erforderlich sind.

Insgesamt ergeben sich bei geringem Aufwand Verbesserungen hinsichtlich der Schaltzeit und/oder hinsichtlich des Bauraumes und/oder hinsichtlich der Kosten und/oder hinsichtlich des Gewichtes.

Jede der Stangen hat vorzugsweise drei Längspositionen, nämlich eine Neutralposition, eine Schaltposition, bei der eine der Stange funktional zugeordnete Gangstufe eingelegt ist, und eine Nicht-Schaltposition, wobei die Neutralposition zwischen der Schaltposition und der Nicht-Schaltposition liegt. Die Koppeleinrichtung zwischen einer Stange und einer weiteren Stange ist vorzugsweise so ausgelegt, dass die Koppeleinrichtung in einer Position beide Schaltstangen in der Neutralposition hält. Die Koppeleinrichtungen können mit Rastmitteln versehen sein, sofern dies erforderlich ist.

Ferner können die Schaltstangen jeweils mit Rastmitteln für die drei Positionen ausgestattet sein.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Kraftfahrzeug-Antriebstranges mit einer Ausführungsform einer erfindungsgemäßen Schaltanordnung;
- Fig. 2: eine Schnittansicht entlang der Linie II-II der Fig. 2;
- Fig. 3: eine der Fig. 2 vergleichbare Darstellung, wobei eine Schaltwelle der Schaltanordnung eine Wählbewegung vollzieht;
- Fig. 4: eine der Fig. 3 vergleichbare Darstellung einer Variante der in den Figuren 1 bis 3 gezeigten Schaltanordnung;
- Fig. 5: eine der Fig. 2 vergleichbare Darstellung einer weiteren Ausführungsform einer Schaltanordnung;
- Fig. 6: eine der Fig. 3 vergleichbare Darstellung der Schaltanordnung der Fig. 5;
- Fig. 7: eine der Fig. 6 vergleichbare Darstellung einer Variante der Schaltanordnung der Figuren 5 und 6;
- Fig. 8: eine der Fig. 5 vergleichbare Darstellung der Schaltanordnung der Fig. 7;
- Fig. 9: eine weitere schematische Draufsicht auf eine Schaltanordnung gemäß einer weiteren Ausführungsform der Erfindung;
- Fig. 10: eine Schnittansicht entlang der Linie X-X der Fig. 9;
- Fig. 11: eine Schnittansicht entlang der Linie XI-XI der Fig. 9; und
- Fig. 12: eine Schnittansicht entlang der Linie XII-XII der Fig. 9.

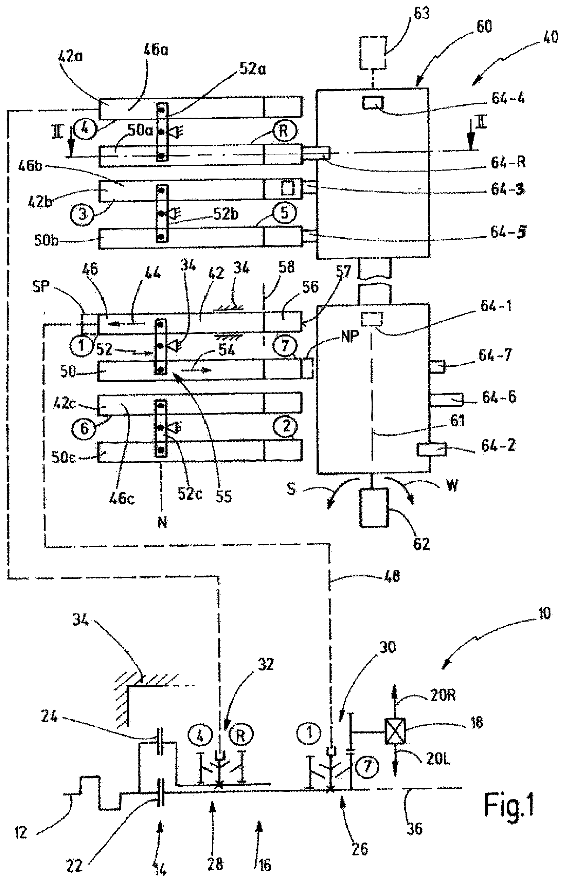

In Fig. 1 ist ein Antriebstrang für ein Kraftfahrzeug schematisch dargestellt und generell mit 10 bezeichnet. Der Antriebstrang 10 beinhaltet einen Antriebsmotor 12, wie einen Verbrennungsmotor oder eine Hybrid-Antriebseinheit, eine Kupplungsanordnung 14, ein Kraftfahrzeuggetriebe 16 in Form eines Stufengetriebes sowie ein Differential 18, mittels dessen Antriebsleistung auf angetriebene Räder 20L, 20R verteilt werden kann.

Das Kraftfahrzeuggetriebe 16 ist zusammen mit der Kupplungsanordnung 14 als Doppelkupplungsgetriebe ausgebildet. Die Kupplungsanordnung 14 beinhaltet demzufolge eine erste Reibkupplung 22 für die ungeraden Gangstufen und eine zweite Reibkupplung 24 für die geraden Gangstufen des Getriebes 16. In entsprechender Weise beinhaltet das Getriebe 16 ein erstes Teilgetriebe 26 für die ungeraden Gangstufen und ein zweites Teilgetriebe 28 für die geraden Gangstufen.

Aus Übersichtsgründen sind nur einige der Gangstufen des Kraftfahrzeuggetriebes 16 dargestellt. Das erste Teilgetriebe 26 beinhaltet eine erste Schaltkupplungsanordnung 30, mittels der bspw. die Gangstufen 1 und 7 schaltbar sind. Ferner beinhaltet das zweite Teilgetriebe 28 eine zweite Schaltkupplungsanordnung 32, mittels der bspw. die Gangstufen 4 und R schaltbar sind. Es versteht sich, dass das erste Teilgetriebe 26 weitere Gangstufen 3, 5 und ggf. 9 aufweisen kann, und das zweite Teilgetriebe 28 weitere Gangstufen 2, 6 und ggf. 8 beinhalten kann.

Das Kraftfahrzeuggetriebe 16 ist, wie dargestellt, als Stufengetriebe in Vorgelegebauweise ausgeführt, und die Schaltkupplungsanordnungen 30 dienen jeweils zum Verbinden von den Gangstufen zugeordneten Losrädern mit einer jeweiligen Welle. Ein gemeinsamer Ausgang der zwei Teilgetriebe 26, 28 ist mit einem Eingangsglied des Differentials 18 verbunden.

In Fig. 1 ist ferner angedeutet, dass der Antriebstrang 10 ein Gehäuse 34 aufweisen kann, das insbesondere als Getriebegehäuse ausgebildet sein kann. Der Antriebstrang 10 definiert eine Längsachse 36, wobei insbesondere Wellen des Getriebes 16 parallel zu dieser Längsachse 36 angeordnet sind.

Bei dem Antriebstrang 10 handelt es sich insbesondere um einen automatisierten Antriebstrang. So werden die zwei Reibkupplungen 22, 24 vorzugsweise automatisiert betätigt, mittels geeigneter Aktuatoren, die in Fig. 1 jedoch nicht dargestellt sind. Zum Betätigen (d.h. Einlegen und Auslegen) von Gangstufen des Getriebes 16 ist eine Schaltanordnung vorgesehen, die in Fig. 1 schematisch dargestellt und mit 40 bezeichnet ist.

Die Schaltanordnung 40 weist eine Schubstange 42 für die Gangstufe 1 auf. Die Schubstange 42 ist axial verschieblich in Bezug auf das Gehäuse 34 gelagert. Die Schubstange 42 ist in Fig. 1 in einer Neutralposition N gezeigt und ist in einer ersten Längsrichtung 44 versetzbar, wodurch die Gangstufe 1 eingelegt wird. Zu diesem Zweck weist die Schubstange 42 einen Schaltkupplungs-Betätigungsabschnitt 46 auf, der über eine Schaltkupplungs-Kopplung 48 mit der ersten Schaltkupplungsanordnung 30 gekoppelt ist.

Die Schaltanordnung 40 weist eine weitere Schubstange 50 auf, die der Gangstufe 7 funktional zugeordnet ist, also einer Gangstufe, die der gleichen Schaltkupplungsanordnung 30 zugeordnet ist wie die Gangstufe 1. Die weitere Schubstange 50 ist über eine Koppeleinrichtung 52 mit der Schubstange 42 derart gekoppelt, dass die Stange 42 und die weitere Stange 50 zwangsweise gegensinnig in axialer Richtung verschiebbar sind. Die Koppeleinrichtung 52 ist dabei insbesondere als zweiseitiger Hebel ausgebildet, der einen gehäusefesten Hebelschwenkpunkt aufweist. Ein Versetzen der Schubstange 42 in der ersten Längsrichtung 44 führt folglich zwangsweise mittels der Koppeleinrichtung 52 zu einem Versetzen der weiteren Schubstange 50 in einer zweiten Längsrichtung 54, die entgegengesetzt ist zu der ersten Längsrichtung 44. Sofern die Schubstange 42 aus der in Fig. 1 mit durchgezogenen Linien gezeigten Neutralposition N in der ersten Längsrichtung 44 in eine Schaltposition SP bewegt wird, wird die über die Koppeleinrichtung 52 gekoppelte weitere Schubstange 50 in der zweiten Längsrichtung 54 in eine Nicht-Schaltposition NP bewegt.

Um bspw. nach einem Einlegen der Gangstufe 1, bei der die Schubstange 42 in die Schaltposition SP bewegt ist, diese Schubstange 42 wieder in die Neutralposition N zu bewegen, ist die weitere Schubstange 50 folglich in der ersten Längsrichtung 44 zu bewegen, wodurch die Schubstange 42 mittels der Koppeleinrichtung 52 in der zweiten Längsrichtung 54 in der Richtung der Neutralposition N bewegt wird.

Diese Ausgestaltung bildet eine Rückholeinrichtung 55 für die Schubstange 42.

Die Schubstange 42 für die Gangstufe 1 und die weitere Stange 50 für die Gangstufe 7 bilden ein Schubstangen-Paar der Schaltanordnung 40. Für die anderen Gangstufen sind weitere Schubstangen-Paare vorgesehen, nämlich eine Schubstange 42a für die Gangstufe 4 und eine weitere Schubstange 50a für die Gangstufe R, wobei die Schubstangen 42a, 50a über eine Koppeleinrichtung 52a miteinander gekoppelt sind. Ferner beinhaltet die Schaltanordnung 40 eine Schubstange 42b für die Gangstufe 3 und eine weitere Schubstange 50b für die Gangstufe 5, die über eine Koppeleinrichtung 52b miteinander gekoppelt sind. Schließlich beinhaltet die Schaltanordnung 40 eine Schubstange 42c für die Gangstufe 6 und eine weitere Schubstange 50c für die Gangstufe 2, die über eine Koppeleinrichtung 52c miteinander gekoppelt sind. Die Funktionsweise der jeweiligen Schubstangen-Paare ist jeweils identisch. Jedes Schubstangen-Paar ist einem der zwei Teilgetriebe 26, 28 des Getriebes 16 zugeordnet. Die Schubstangen-Paare 42, 50 sowie 42b, 50b sind dem ersten Teilgetriebe 26 zugeordnet. Die Schubstangen-Paare 42a, 50a sowie 42c, 50c sind dem zweiten Teilgetriebe 28 zugeordnet.

An ihrem in die zweite Längsrichtung 54 weisenden Ende beinhalten die Schubstangen jeweils einen verschwenkbaren Abschnitt 56. Der verschwenkbare Abschnitt 56 weist an seiner axialen Stirnseite einen Nockenfolgerabschnitt 57 auf und ist um eine Schwenkachse 58 verschwenkbar, die quer, insbesondere senkrecht zu der Längsachse 36 ausgerichtet ist.

Die Schaltanordnung 40 beinhaltet ferner eine Schaltwelle bzw. Nockenwelle 60, die eine Schaltwellenachse 61 aufweist, die ebenfalls quer zu der Längsachse 36 ausgerichtet ist, insbesondere parallel zu den Schwenkachsen 58 der verschwenkbaren Abschnitte 56 der Schubstangen 42, 50.

Die Schaltwelle 60 ist mittels eines einzelnen Elektromotors 62 bidirektional antreibbar, und zwar entweder in einer ersten Drehrichtung S (Schaltrichtung) und einer zweiten Drehrichtung W (Wählrichtung).

Alternativ hierzu kann die Schaltwelle 60 durch zwei Schaltwellenabschnitte gebildet sein, die jeweils mittels eigener Elektromotoren angetrieben sind, was in Fig. 1 durch einen zweiten Elektromotor 63 angedeutet ist.

Die Schubstangen 42, 50 sind in einer gemeinsamen Ebene angeordnet, die parallel zu der Schaltwellenachse 61 ausgerichtet ist, insbesondere parallel versetzt hierzu.

An der Schaltwelle 60 ist eine Mehrzahl von Schaltnocken 64 ausgebildet, die jeweils einer der Schubstangen 42, 50 bzw. einer der Gangstufen des Stufengetriebes zugeordnet sind. Mit anderen Worten sind die Schaltnocken 64, die in Fig. 1 mit einem Suffix versehen sind, der der Gangstufe entspricht, denen sie jeweils zugeordnet sind, entlang der Schaltwellenachse 61 so verteilt angeordnet, dass sie jeweils mit der Längserstreckung der ihnen zugeordneten Schubstange 42 bzw. 50 ausgerichtet sind.

Ferner sind die Schaltnocken 64 über den Umfang der Schaltwelle 60 verteilt angeordnet. In der in Fig. 1 gezeigten Draufsicht ist der Schaltnocken 64-4 bspw. nach oben ausgerichtet, und der Schaltnocken 64-1 bspw. nach unten. Ferner ist in Fig. 1 schematisch angedeutet, dass der Schaltnocken 64-R an dem Nockenfolgerabschnitt 57 der weiteren Schubstange 50a für die Rückwärtsgangstufe R anliegt. Der Schaltnocken 64-5 ist schräg nach unten gerichtet, und der Schaltnocken 64-3 ist in der Darstellung der Fig. 1 unterhalb der zugeordneten Schubstange 42b angeordnet.

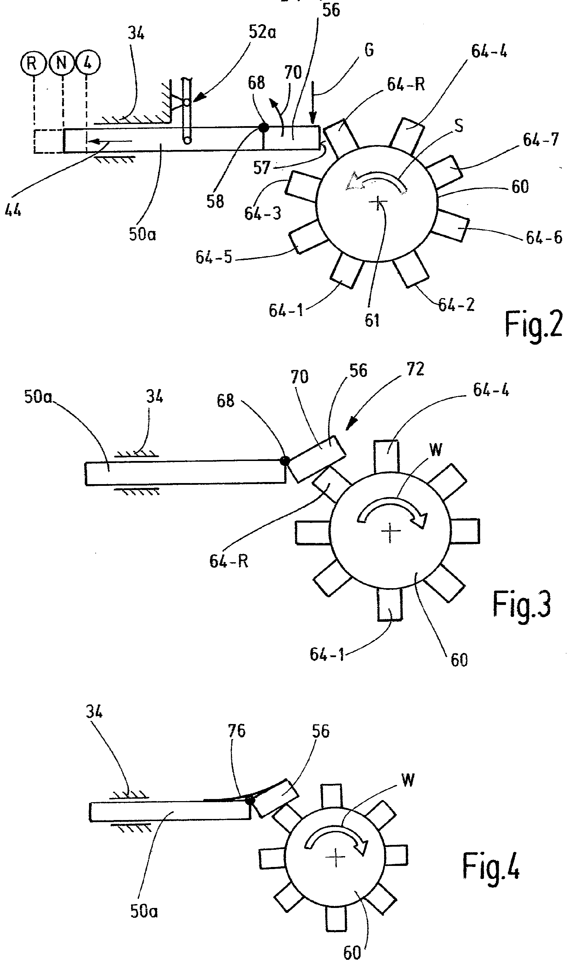

Die verschwenkbaren Abschnitte 56 der Schubstangen 42, 50 sind jeweils über ein schematisch angedeutetes Scharnier 68 oder dergleichen verschwenkbar an einem Grundkörper der jeweiligen Schubstange 42, 50 verschwenkbar angelenkt. Das Scharnier 68 ist dabei so ausgebildet, dass es in Abhängigkeit von der Einbaulage in dem Stufengetriebe 16 dafür sorgt, dass der verschwenkbare Abschnitt 56 aufgrund von Gravitationskräften G generell in einer Lage ist, bei der er mit dem Grundkörper der jeweiligen Schubstange 42, 50 ausgerichtet ist, wie es in Fig. 2 dargestellt ist. Anstelle oder zusätzlich zu den Gravitationskräften G können Federn vorgesehen sein, um den verschwenkbaren Abschnitt 56 in die in Fig. 2 dargestellte Grundposition zu versetzen.

In dieser Grundposition liegt der verschwenkbare Abschnitt 56 so an dem Grundkörper der jeweiligen Schaltstange 42, 50 an, dass auf den verschwenkbaren Abschnitt 56 (genauer dessen Nockenfolgerabschnitt 57) ausgeübte Axialkräfte in Richtung der ersten Längsrichtung 44 auf den Grundkörper der jeweiligen Schaltstange 42, 50 übertragen werden können. Fig. 2 zeigt eine Position, bei der sich der Schaltnocken 64-R in einer Drehposition befindet, bei der er an dem Nockenfolgerabschnitt 57 der Schubstange 50a für die Rückwärtsgangstufe R anliegt. Ein Verdrehen der Schaltwelle 60 in Schaltrichtung S führt dann zu einem Axialversatz der Schubstange 50a in der ersten Längsrichtung 44, um auf diese Weise aus der in Fig. 2 gezeigten Neutralposition N die Rückwärtsgangstufe R einzulegen.

Zuvor ist die Schubstange 50a der Rückwärtsgangstufe R als jene Schubstange angewählt worden, die einer Zielgangstufe (hier Rückwärtsgangstufe) entspricht. Dies ist durch einen Wählvorgang erfolgt, bei dem die Schaltwelle 60 in einer zweiten Drehrichtung W (Wählrichtung) verdreht worden ist, wie es in Fig. 3 dargestellt ist. Hierbei ist die Schaltwelle 60 verdreht worden, bis der Schaltnocken 64-R sich auf der Seite des Nockenfolgerabschnittes 57 der Schubstange 50a befunden hat.

Auf dem Weg in diese Position ist es bei dem Verdrehen der Schaltwelle 60 in der zweiten Drehrichtung zu einer Anlage des Schaltnockens 64-R an der Unterseite des verschwenkbaren Abschnittes 56 der zugeordneten Schubstange (in Fig. 3 beispielhaft 50a gezeigt) gekommen. Genauer zeigt Fig. 3 einen Zustand, bei dem der Schaltnocken 64-R aufgrund der Wählbewegung W an der Unterseite des verschwenkbaren Abschnittes 56 der Schubstange 50a angegriffen hat, wodurch der verschwenkbare Abschnitt 56 eine Ausweichbewegung vollzogen hat, die in Fig. 3 bei 70 dargestellt ist. Durch diese Auslenkung bzw. Ausweichbewegung 70 hat die Anlage des Schaltnockens 64-R hierbei keinen Einfluss auf die Axialposition der zugeordneten Schubstange 50a. Erst wenn sich der Schaltnocken 64-R in der in Fig. 2 gezeigten Position befindet, kann die Drehrichtung der Schaltwelle 60 umgekehrt werden, um eine Schubkraft in der ersten Längsrichtung 44 auf die Schubstange 50a auszuüben.

Bei dem Wählvorgang kann es in Abhängigkeit davon, wie weit der Ziel-Schaltnocken von der Ziel-Schubstange entfernt ist, auch dazu gekommen sein, dass die Schaltnocken von anderen Gangstufen die verschwenkbaren Abschnitte ihrer zugeordneten Schubstange ausgelenkt haben, wie es in Fig. 3 schematisch dargestellt ist.

Nachdem die jeweilige Gangstufe eingelegt ist (Position R der weiteren Schubstange 50a in Fig. 2) bleibt diese Gangstufe eingelegt, bis mittels des Schaltnockens 64-4 eine Schubbewegung auf die gekoppelte Schubstange 42a ausgeübt wird, und zwar mittels des Schaltnockens 64-4. Ausgehend aus der in Fig. 2 dargestellten Position ist hierbei die Schaltwelle 60 in der Wählrichtung W so weit zu drehen, bis sich der Schaltnocken 64-4 in der Position befindet, die in Fig. 2 dem Schaltnocken 64-R zugeordnet ist.

Aufgrund der Tatsache, dass nach dem Einlegen einer Gangstufe (beispielhaft Gangstufe R in Fig. 2) diese Gangstufe eingelegt bleibt, wenn ein Wählvorgang erfolgt, kann bspw. in dem anderen Teilgetriebe eine weitere Gangstufe eingelegt werden, bspw. die Gangstufe 1, in dem die Schaltwelle 60 zunächst in Wählrichtung bewegt wird, bis der Schaltnocken 64-1 sich in der Position befindet, die in Fig. 2 dem Schaltnocken 64-R zugeordnet ist. Anschließend kann die Schaltwelle in Schaltrichtung S bewegt werden, um die Schubstange 42 aus der in Fig. 1 gezeigten Neutralposition in die Schaltposition SP zu bewegen, die der Gangstufe 1 zugeordnet ist.

Aufgrund der Tatsache, dass die Schaltnocken über den Umfang verteilt angeordnet sind, ist es möglich, gezielt jeweils nur eine Schubstange in der ersten Längsrichtung 44 zu bewegen, wobei die anderen Schubstangen während des Überganges einer Schubstange von der Neutralposition N in die Schaltposition SP unbewegt bleiben.

Die Schaltnocken 64 und die verschwenkbaren Abschnitte 56 bilden bei der oben in Bezug auf die Figuren 1 bis 3 dargestellten Ausführungsformen jeweils gemeinsam eine Freilauf-Mitnehmereinrichtung 72, die dadurch gekennzeichnet ist, dass bei einem Verdrehen der Schaltwelle 60 in der Schaltrichtung S eine Schubstange in einer ersten Längsrichtung 44 mitgenommen wird, wohingegen bei einer Verdrehung der Schaltwelle 60 in der Wählrichtung W eine Entkopplung der Stangen von der Schaltwelle erfolgt.

Obgleich die oben beschriebene Schaltanordnung 40 für ein Doppelkupplungsgetriebe mit zwei Teilgetrieben 26, 28 ausgelegt ist, versteht sich, dass die Funktionsweise der Schaltanordnung 40 in gleicher Weise auf ein automatisiertes Schaltgetriebe anwendbar ist, dessen Kupplungsanordnung nur eine einzelne Reibkupplung aufweist und das durch ein einfaches Getriebe in Vorgelegebauweise gebildet ist, das eine Mehrzahl von Vorwärtsgangstufen und eine Rückwärtsgangstufe aufweisen kann. Ebenso ist es mit der Schaltanordnung 40 möglich, eine vorhandene Parksperre zu betätigen. Es versteht sich dabei, dass die benötigte Schaltkupplungs-Kopplung hierbei von der gezeigten Schaltkupplungs-Kopplung 48 abweichen kann.

Generell lässt sich die Schaltanordnung jedoch auch auf andere Arten von Kraftfahrzeuggetrieben anwenden, bspw. auf Wandler-Automatikgetriebe oder auf andere Stufengetriebe.

Nachfolgend werden weitere Ausführungsformen von Schaltanordnungen für Kraftfahrzeuge beschrieben, die hinsichtlich Aufbau und Funktionsweise generell der Ausführungsform der Figuren 1 bis 3 entsprechen. Gleiche Elemente sind daher durch gleiche Bezugszeichen gekennzeichnet. Im Folgenden werden im Wesentlichen die Unterschiede erläutert.

Fig. 4 zeigt eine der Fig. 3 entsprechende Darstellung, bei der der verschwenkbare Abschnitt 56 gegenüber einem Grundkörper einer Schubstange 50a verschwenkt ist. Hierbei ist der Schubstange 50a eine Federeinrichtung 76 zugeordnet, bspw. in Form einer Blattfeder 76, die dafür sorgt, dass der verschwenkbare Abschnitt 56 nach einem Verschwenken aus seiner Ausgangslage heraus sicher wieder in die Grundposition zurückgeführt wird, die in Fig. 2 dargestellt ist. Die Federeinrichtung 76 kann so ausgelegt sein, dass sie zusätzlich zu den Gravitationskräften G wirkt, oder anstelle von diesen oder gegen diese.

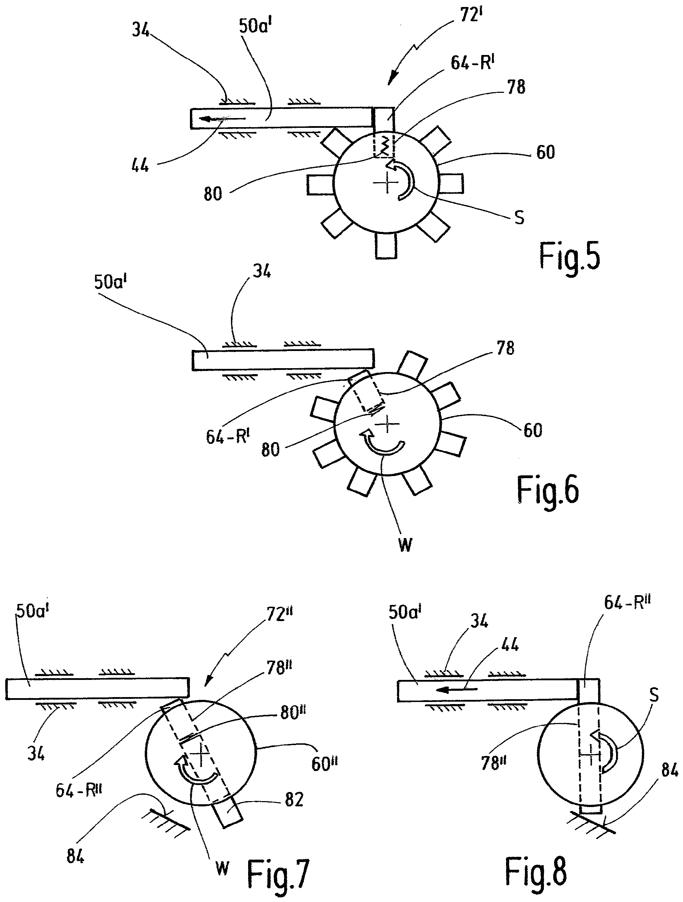

Bei den in den Figuren 5 bis 8 gezeigten Ausführungsformen gemäß dem Stand der Technik ist eine Freilauf-Mitnehmereinrichtung jeweils dadurch gebildet, dass ein Schaltnocken radial beweglich an der Schaltwelle gelagert ist, um den Schaltnocken bei einer Verdrehung der Schaltwelle in der zweiten Drehrichtung bewegen zu können, ohne die zugeordnete Stange in axialer Richtung zu verschieben.

Eine erste Variante ist in den Figuren 5 und 6 gezeigt.

Hierbei ist jedem Schaltnocken (beispielhaft in den Figuren 5 und 6 der Schaltnocken 64-R') eine Ausnehmung 78 in der Schaltwelle 60 zugeordnet. Die Schaltnocken 64 werden über jeweilige Druckfedern 80 radial aus den Ausnehmungen 78 herausgedrückt, und zwar in die in Fig. 5 gezeigte Grundposition, bei der sie eine Schubkraft auf eine zugeordnete Schubstange 50a' ausüben können.

Bei dieser Ausführungsform können die Schubstangen jeweils einstückig ausgeführt sein, also ohne verschwenkbaren Abschnitt 56 wie bei den Ausführungsformen der Figuren 1 bis 4.

In Fig. 5 ist dabei gezeigt, dass ein Schaltnocken 64-R' einer Freilauf-Mitnehmereinrichtung 72' eine Schubkraft auf die Schubstange 50a' ausüben kann, um diese in der ersten Längsrichtung 44 zu versetzen. Fig. 6 zeigt den entsprechenden Wählvorgang, bei dem die Schaltwelle 60 in der zweiten Drehrichtung W verdreht wird. Hier ist gezeigt, dass der Schaltnocken 64-R' bei der Wählbewegung W von der Unterseite der Schubstange 50a' radial nach innen in die Ausnehmung 78 eingedrückt wird, um die Freilaufeigenschaft zu erreichen.

Eine alternative Ausführungsform gemäß dem Stand der Technik ist in den Figuren 7 und 8 gezeigt. Hier beinhaltet eine Freilauf-Mitnehmereinrichtung 72" ebenfalls einen Schaltnocken 64-R", der radial in eine Ausnehmung 78" eingedrückt werden kann. Bei dieser Variante erstreckt sich der Schaltnocken 64-R" jedoch in radialer Richtung durch die Schaltwelle 60" hindurch und bildet auf der gegenüberliegenden Seite einen Rückholnocken 82.

Bei einer Wählbewegung, wie sie in Fig. 7 dargestellt ist, kommt der Rückholnocken 82 in Anlage an eine Rückholrampe 84, um nach einem Durchtauchen des Schaltnockens 64-R" unter der Schubstange 50a' hindurch aufgrund des Formschlusses zwischen Rückholnocken 82 und Rückholrampe 84 radial aus der Ausnehmung 78" herausgedrückt zu werden. Dieser Zustand ist in Fig. 8 dargestellt, von dem ausgehend wiederum eine Schaltbewegung S eingeleitet werden kann, um die Schubstange 50a' in der ersten Längsrichtung 44 axial zu versetzen.

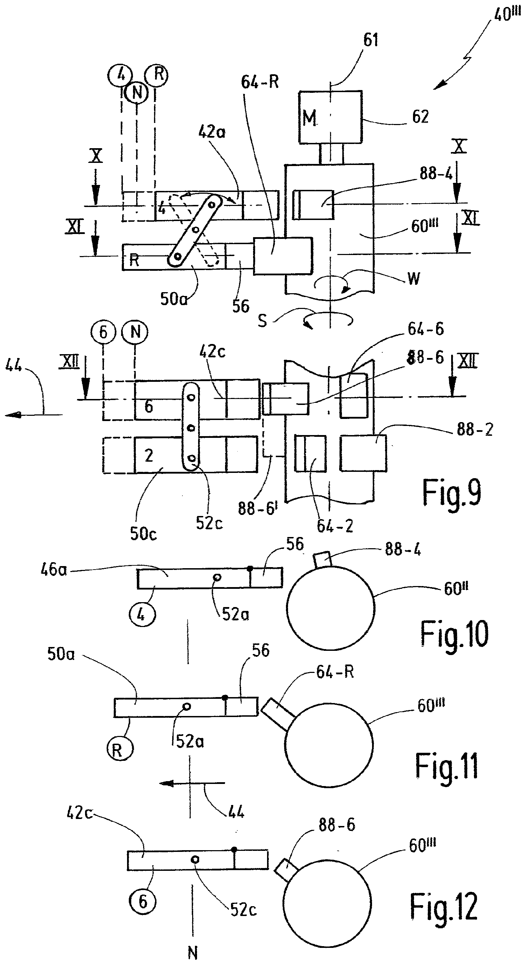

In den Figuren 9 bis 12 ist eine weitere Ausführungsform einer Schaltanordnung 40''' gezeigt, die hinsichtlich Aufbau und Funktionsweise generell der Schaltanordnung 40 der Fig. 1 bis 3 entspricht.

Dabei sind an der Schaltwelle 60''' in Zuordnung zu den jeweiligen Schaltnocken 64 jeweilige Neutralnocken 88 ausgebildet. Die Neutralnocken 88 sind mit ihren jeweiligen Schaltnocken 64 in Umfangsrichtung ausgerichtet und weisen eine geringere radiale Länge auf als die Schaltnocken 64.

Ein Neutralnocken 88, der in Umfangsrichtung mit einem Schaltnocken ausgerichtet ist, ist dazu ausgelegt, bei einem Durchführen einer Schubbewegung auf eine Schubstange, die dem Schaltnocken zugeordnet ist, wenigstens eine Schubstange einer Gangstufe des gleichen Teilgetriebes in eine Neutralposition zu versetzen.

Dies ist in den Figuren 9 bis 12 anhand folgenden Beispieles erläutert. In den Figuren 9 bis 12 befindet sich ein Schaltnocken 64-R in Anlage an einer Schubstange 50a, ähnlich der Ausgangsposition, wie sie in Fig. 2 dargestellt ist. Die Schubstange 50a dient zum Einlegen der Rückwärtsgangstufe R. Bei einer Bewegung der Schaltwelle 60''' in Schaltrichtung S wird die Schubstange 50a in der ersten Längsrichtung versetzt, genauso wie bei der Ausführungsform der Figuren 1 bis 3.

Der dem Schaltnocken 64-R zugeordnete Neutralnocken 88-6 ist dabei mit der Schubstange 42c axial ausgerichtet, die einer Gangstufe (Gangstufe 6) zugeordnet ist, die auf dem gleichen Teilgetriebe sitzt wie die Zielgangstufe R.

Bei der Schaltbewegung kann der Neutralnocken 88-6 die Schubstange 42c ausgehend aus einer Nicht-Schaltposition (vgl. NP in Fig. 1) in die Neutralposition N versetzen. Die radiale Länge des Neutralnockens 88 ist dabei so gewählt, dass er die zugeordnete Schubstange 42c so weit in der ersten Längsrichtung 44 verschieben kann, bis sich die Schubstange 42c in der in Fig. 12 gezeigten Neutralposition befindet. Während dieser Bewegung oder unmittelbar im Anschluss an diese Drehbewegung der Schaltwelle 60''' wird dann die Schubstange 50a, die dem Schaltnocken 64-R zugeordnet ist, aus der Neutralposition in die Schaltposition SP (vgl. Fig. 1) versetzt, die einer eingelegten Rückwärtsgangstufe R entspricht.

Der Neutralnocken, der einem Schaltnocken zugeordnet ist, kann dabei eine Gangstufe des Teilgetriebes der Zielgangstufe in die Neutralposition versetzen. Vorzugsweise ist der Neutralnocken 88 so ausgebildet und weist eine solche axiale Länge (in Richtung der Längsrichtung 61 der Schaltwelle 60''' gesehen) auf, so dass er sämtliche anderen Gangstufen jenes Teilgetriebes in die Neutralposition versetzen kann, bis auf jene Gangstufe, die der Schubstange zugeordnet ist, die mit der Ziel-Schubstange über eine Koppeleinrichtung 52 gekoppelt ist. In dem Beispiel der Fig. 9 könnte der Neutralnocken 88-6 sich folglich über eine solche axiale Länge erstrecken (bei 88-6' gezeigt), dass er nicht nur die Schubstange 42c der Gangstufe 6 in die Neutralposition versetzen kann, sondern auch die Schubstange 50c, die der Gangstufe 2 jenes Teilgetriebes zugeordnet ist. Andererseits erstreckt sich der Neutralnocken 88-6' nicht auf eine Axialposition, bei der er die Schubstange 42a versetzen würde, da die Schubstange 42a bei der Bewegung der Schubstange 50a in die Schaltposition SP (R) mittels der Koppeleinrichtung in die Nicht-Schaltposition NP versetzt wird, wie es in Fig. 9 dargestellt ist.

Vorliegend dient der Neutralnocken folglich dazu, dass er bei einem Verdrehen der Schaltwelle in der ersten Drehrichtung zum Einlegen einer Gangstufe eines Teilgetriebes eine Stange, die einer anderen Gangstufe des gleichen Teilgetriebes zugeordnet ist, in eine Neutralposition versetzt.

Ein derartiges Konzept lässt sich doch auch auf eine Schaltanordnung anwenden, die zur Betätigung eines Kraftfahrzeuggetriebes in Form eines automatisierten Schaltgetriebes ausgelegt ist. In diesem Fall kann der Neutralnocken dazu ausgebildet sein, sämtliche anderen Schubstangen in eine Neutralposition zu versetzen, bis auf die Schubstange, die dem dem Neutralnocken zugeordneten Schaltnocken zugeordnet ist und bis auf jene Schubstange, die mit jener Schubstange über eine Koppeleinrichtung gekoppelt ist.

Insgesamt kann mit der vorliegenden Erfindung eine elektromotorische Schaltbetätigung insbesondere für Doppelkupplungsgetriebe bereitgestellt werden, wobei geringe Schaltzeiten, freie Schaltreihenfolgen und geringe Package-Anforderungen realisierbar sind, und zwar vorzugsweise bei Verwendung von nur einem Antriebsmotor bzw. Schaltmotor und vorzugsweise bei fertigungs- und montagetechnisch einfachem Aufbau.

## Patentansprüche

1. Schaltanordnung (40) für ein Kraftfahrzeuggetriebe (16), mit einem Gehäuse (34), das eine Längsachse (36) definiert, mit einer Stange (42), die in Bezug auf das Gehäuse (34) axial verschieblich gelagert ist und die mit einer Schaltkupplungsanordnung (30) koppelbar ist, und mit einer Schaltwelle (60), die in Bezug auf das Gehäuse (34) verdrehbar gelagert ist und die quer zu der Längsachse (36) ausgerichtet ist, wobei die Schaltwelle (60) mit der Stange (42) mittels einer Mitnehmereinrichtung (72) gekoppelt ist, derart, dass die Stange (42) bei einer Verdrehung der Schaltwelle (60) in einer ersten Drehrichtung (S) in einer ersten Längsrichtung (44) verschoben wird, wobei die Mitnehmereinrichtung eine Freilauf-Mitnehmereinrichtung (72) ist, die so ausgebildet ist, dass die Stange (42) bei einer Verdrehung der Schaltwelle (60) in einer zweiten Drehrichtung (W) von der Schaltwelle (60) entkoppelt ist, und wobei die Freilauf-Mitnehmereinrichtung (72) einen Schaltnocken (64) an der Schaltwelle (60) und einen Nockenfolgerabschnitt (57) an der Stange (42) aufweist, wobei der Schaltnocken (64) bei Verdrehung der Schaltwelle (60) in der ersten Drehrichtung (S) an dem Nockenfolgerabschnitt (57) der Stange (42) angreift, um diese in der ersten Längsrichtung (44) zu versetzen,
**dadurch gekennzeichnet, dass**
der Nockenfolgerabschnitt (57) beweglich in Bezug auf die Stange (42) gelagert ist, derart, dass der Nockenfolgerabschnitt (57) bei Verdrehung der Schaltwelle (60) in der zweiten Drehrichtung (W) von dem Schaltnocken (64) bewegbar ist, ohne die Stange (42) in axialer Richtung zu verschieben.

2. Schaltanordnung nach Anspruch 1, **gekennzeichnet durch** eine Rückholeinrichtung (55), mittels der die Stange (42) in einer zweiten Längsrichtung (54) verschiebbar ist.

3. Schaltanordnung nach Anspruch 1 oder 2, **dadurch gekennzeichnet, dass** die Schaltanordnung eine weitere Stange (50) aufweist, die in Bezug auf das Gehäuse (34) axial verschieblich gelagert ist, wobei die Stange (42) und die weitere Stange (50) über eine Koppeleinrichtung (52) miteinander gekoppelt sind, die so ausgebildet ist, dass die Stange (42) und die weitere Stange (50) zwangsweise gegensinnig in axialer Richtung verschiebbar sind.

4. Schaltanordnung nach Anspruch 3, **dadurch gekennzeichnet, dass** die weitere Stange (50) über eine weitere Freilauf-Mitnehmereinrichtung mit der Schaltwelle (60) gekoppelt ist.

5. Schaltanordnung nach einem der Ansprüche 1 bis 4, **dadurch gekennzeichnet, dass** der Schaltnocken beweglich an der Schaltwelle (60) gelagert ist, derart, dass der Schaltnocken bei Verdrehung der Schaltwelle (60) in der zweiten Drehrichtung (W) bewegbar ist, ohne die Stange (42) in axialer Richtung zu verschieben.

6. Schaltanordnung nach einem der Ansprüche 1 - 5, **dadurch gekennzeichnet, dass** die Schaltanordnung (60) zur Betätigung von Gangstufen (1-7, R) eines Doppelkupplungsgetriebes (16) ausgelegt ist, das zwei Teilgetriebe (26, 28) aufweist, wobei an der Schaltwelle (60) wenigstens ein Neutralnocken (88) ausgebildet ist, der in Bezug auf einen Schaltnocken (64) der Schaltwelle (60) so angeordnet ist, dass er, bei einem Verdrehen der Schaltwelle (60) in der ersten Drehrichtung (S) zum Einlegen einer Gangstufe (R) eines Teilgetriebes (28), eine Stange (42), die einer anderen Gangstufe (6) des gleichen Teilgetriebes (28) zugeordnet ist, in eine Neutralposition (N) versetzt.

7. Schaltanordnung nach einem der Ansprüche 1 - 6, **dadurch gekennzeichnet, dass** die Schaltwelle (60) von einem einzelnen Elektromotor (62) angetrieben ist.

8. Schaltanordnung nach einem der Ansprüche 1 - 7, **dadurch gekennzeichnet, dass** die Stange (42) als Schubstange ausgebildet ist, wobei der Schaltnocken (64) bei Verdrehen der Schaltwelle (60) in der ersten Drehrichtung (S) an einer axialen Stirnseite (57) der Stange (42) angreift.

9. Schaltanordnung nach Anspruch 8, **dadurch gekennzeichnet, dass** die Stange (42) einen Schaltkupplungs-Betätigungsabschnitt (46) und einen in Bezug auf den Schaltkupplungs-Betätigungsabschnitt (46) verschwenkbaren Abschnitt (56) aufweist, wobei die axiale Stirnseite (57), an der der Schaltnocken (64) angreifen kann, an dem verschwenkbaren Abschnitt (56) ausgebildet ist.

10. Verfahren zum Betätigen einer Schaltkupplungsanordnung (30) eines Kraftfahrzeuggetriebes (16), insbesondere mittels einer Schaltanordnung (40) nach einem der Ansprüche 1 - 9, wobei die Schaltkupplungsanordnung (30) mit einer axial verschieblichen Stange (42) gekoppelt ist, wobei eine quer zu der Stange (42) ausgerichtete Schaltwelle (60) mittels eines Antriebsmotors (62) in einer ersten und in einer zweiten Drehrichtung (S, W) antreibbar ist und wobei an der Schaltwelle (60) ein Schaltnocken (64) ausgebildet ist, mit den Schritten
- Wählen der Schaltkupplungsanordnung (30) durch Verdrehen der Schaltwelle (60) in der zweiten Drehrichtung (W), ohne hierbei die Stange (42) axial zu versetzen, und
- Schalten der Schaltkupplungsanordnung (30), indem die Schaltwelle (60) in der ersten Drehrichtung (S) verdreht wird, wobei der Schaltnocken (64) die Stange (42) in axialer Richtung verschiebt, um eine Gangstufe der Schaltkupplungsanordnung (30) einzulegen.

## Claims

1. Shifting arrangement (40) for a motor vehicle gearbox (16), having a housing (34) which defines a longitudinal axis (36), having a rod (42) which is mounted axially displaceably in relation to the housing (34) and which can be coupled to a shifting clutch arrangement (30), and having a shift shaft (60) which is mounted rotatably in relation to the housing (34) and which is oriented transversely with respect to the longitudinal axis (36), the shift shaft (60) being coupled to the rod (42) by means of a driver device (72) in such a way that the rod (42) is displaced in a first longitudinal direction (44) in the case of a rotation of the shift shaft (60) in a first rotational direction (S), wherein the driver device is a freewheel driver device (72) which is configured in such a way that the rod (42) is decoupled from the shift shaft (60) in the case of a rotation of the shift shaft (60) in a second rotational direction (W), and wherein the freewheel driver device (72) has a shifting cam (64) on the shift shaft (60) and a cam follower section (57) on the rod (42), the shifting cam (64) acting on the cam follower section (57) of the rod (42) in the case of a rotation of the shift shaft (60) in the first rotational direction (S), in order to move the said rod (42) in the first longitudinal direction (44),
**characterized in that**
the cam follower section (57) is mounted movably in relation to the rod (42), in such a way that the cam follower section (57) can be moved away from the shifting cam (64) in the case of a rotation of the shift shaft (60) in the second rotational direction (W), without the rod (42) being displaced in the axial direction.

2. Shifting arrangement according to Claim 1, **characterized by** a restoring device (55), by means of which the rod (42) can be displaced in a second longitudinal direction (54).

3. Shifting arrangement according to Claim 1 or 2, **characterized in that** the shifting arrangement has a further rod (50) which is mounted axially displaceably in relation to the housing (34), the rod (42) and the further rod (50) being coupled to one another via a coupling device (52) which is configured in such a way that the rod (42) and the further rod (50) can be displaced compulsorily in an opposed manner in the axial direction.

4. Shifting arrangement according to Claim 3, **characterized in that** the further rod (50) is coupled to the shift shaft (60) via a further freewheel driver device.

5. Shifting arrangement according to one of Claims 1 to 4, **characterized in that** the shifting cam is mounted movably on the shift shaft (60), in such a way that the shifting cam can be moved in the case of a rotation of the shift shaft (60) in the second rotational direction (W), without the rod (42) being displaced in the axial direction.

6. Shifting arrangement according to one of Claims 1 to 5, **characterized in that** the shifting arrangement (60) is designed to actuate gear stages (1-7, R) of a double clutch gearbox (16) which has two component gearboxes (26, 28), at least one neutral cam (88) being configured on the shift shaft (60), which neutral cam (88) is arranged in relation to a shifting cam (64) of the shift shaft (60) in such a way that, in the case of a rotation of the shift shaft (60) in the first rotational direction (S) in order to engage a gear stage (R) of a component gearbox (28), it moves a rod (42) which is assigned to another gear stage (6) of the same component gearbox (28) into a neutral position (N).

7. Shifting arrangement according to one of Claims 1 to 6, **characterized in that** the shift shaft (60) is driven by an individual electric motor (62).

8. Shifting arrangement according to one of Claims 1 to 7, **characterized in that** the rod (42) is configured as a push rod, wherein the shifting cam (64) acts on an axial end side (57) of the rod (42) in the case of a rotation of the shift shaft (60) in the first rotational direction (S).

9. Shifting arrangement according to Claim 8, **characterized in that** the rod (42) has a shifting clutch actuating section (46) and a section (56) which can be pivoted in relation to the shifting clutch actuating section (46), the axial end side (57), on which the shifting cam (64) can act, being configured on the pivotable section (56).

10. Method for actuating a shifting clutch arrangement (30) of a motor vehicle gearbox (16), in particular by means of a shifting arrangement (40) according to one of Claims 1 to 11, the shifting clutch arrangement (30) being coupled to an axially displaceable rod (42), it being possible for a shift shaft (60) which is oriented transversely with respect to the rod (42) to be driven in a first and in a second rotational direction (S, W) by means of a drive motor (62), and a shifting cam (64) being configured on the shift shaft (60), having the steps
- selecting of the shifting clutch arrangement (30) by way of rotation of the shift shaft (60) in the second rotational direction (W), without the rod (42) being moved axially in the process, and
- shifting of the shifting clutch arrangement (30), by the shift shaft (60) being rotated in the first rotational direction (S), the shifting cam (64) displacing the rod (42) in the axial direction, in order to engage a gear stage of the shifting clutch arrangement (30).

## Revendications

1. Agencement de commutation (40) pour une boîte de vitesses de véhicule automobile (16), avec un boîtier (34), qui définit un axe longitudinal (36), avec une tige (42), qui est montée de façon déplaçable axialement par rapport au boîtier (34) et qui peut être couplée à un agencement d'embrayage (30), et avec un arbre de changement de vitesse (60), qui est monté de façon rotative par rapport au boîtier (34) et qui est orienté transversalement à l'axe longitudinal (36), dans lequel l'arbre de changement de vitesse (60) est couplé à la tige (42) au moyen d'un système d'entraîneur (72), de telle manière que la tige (42) soit déplacée dans une première direction longitudinale (44) lors d'une rotation de l'arbre de changement de vitesse (60) dans un premier sens de rotation (S), dans lequel le système d'entraîneur est un système d'entraîneur à roue libre (72), qui est configuré de telle manière que la tige (42) soit découplée de l'arbre de changement de vitesse (60) lors d'une rotation de l'arbre de changement de vitesse (60) dans un second sens de rotation (W), et dans lequel le système d'entraîneur à roue libre (72) présente une came de changement de vitesse (64) sur l'arbre de changement de vitesse (60) et une partie de suiveur de came (57) sur la tige (42), dans lequel la came de changement de vitesse (64) agit sur la partie de suiveur de came (57) lors d'une rotation de l'arbre de changement de vitesse (60) dans le premier sens de rotation (S) afin de déplacer celle-ci dans la première direction longitudinale (44), **caractérisé en ce que** la partie de suiveur de came (57) est montée de façon mobile par rapport à la tige (42), de telle manière que la partie de suiveur de came (57) puisse être déplacée par la came de changement de vitesse (64) lors d'une rotation de l'arbre de changement de vitesse (60) dans le second sens de rotation (W) sans déplacer la tige (42) en direction axiale.

2. Agencement de commutation selon la revendication 1, **caractérisé par** un système de rappel (55), au moyen duquel la tige (42) est déplaçable dans une deuxième direction longitudinale (54).

3. Agencement de commutation selon la revendication 1 ou 2, **caractérisé en ce que** l'agencement de commutation présente une autre tige (50), qui est montée de façon déplaçable axialement par rapport au boîtier (34), dans lequel la tige (42) et l'autre tige (50) sont couplées l'une à l'autre par un système de couplage (52), qui est configuré de telle manière que la tige (42) et l'autre tige (50) soient déplaçables de façon forcée en sens contraire en direction axiale.

4. Agencement de commutation selon la revendication 3, **caractérisé en ce que** l'autre tige (50) est couplée à l'arbre de changement de vitesse (60) par un autre système d'entraîneur à roue libre.

5. Agencement de commutation selon l'une quelconque des revendications 1 à 4, **caractérisé en ce que** la came de changement de vitesse est montée de façon mobile sur l'arbre de changement de vitesse (60), de telle manière que la came de changement de vitesse soit déplaçable lors d'une rotation de l'arbre de changement de vitesse (60) dans le second sens de rotation (W), sans déplacer la tige (42) en direction axiale.

6. Agencement de commutation selon l'une quelconque des revendications 1 à 5, **caractérisé en ce que** l'agencement de commutation (60) est conçu pour l'actionnement de rapports de vitesse (1 - 7, R) d'une boîte de vitesses à double embrayage (16), qui présente deux boîtes de vitesses partielles (26, 28), dans lequel au moins une came de point neutre (88) est formée sur l'arbre de changement de vitesse (60), qui est disposée par rapport à une came de changement de vitesse (64) de l'arbre de changement de vitesse (60) de telle manière que, lors d'une rotation de l'arbre de changement de vitesse (60) dans le premier sens de rotation (S) pour engager un premier rapport de vitesse (R) d'une boîte de vitesses partielle (28), elle déplace dans une position neutre (N) une tige (42), qui est associée à un autre rapport de vitesse (6) de la même boîte de vitesses partielle (28).

7. Agencement de commutation selon l'une quelconque des revendications 1 à 6, **caractérisé en ce que** l'arbre de changement de vitesse (60) est entraîné par un seul moteur électrique (62).

8. Agencement de commutation selon l'une quelconque des revendications 1 à 7, **caractérisé en ce que** la tige (42) est réalisée sous forme de tige de poussée, dans lequel la came de changement de vitesse (64) agit sur un côté frontal axial (57) de la tige (42) lors d'une rotation de l'arbre de changement de vitesse (60) dans le premier sens de rotation (S).

9. Agencement de commutation selon la revendication 8, **caractérisé en ce que** la tige (42) présente une partie d'actionnement d'embrayage (46) et une partie (56) pouvant pivoter par rapport à la partie d'actionnement d'embrayage (46), dans lequel le côté frontal axial (57), sur lequel la came de changement de vitesse (64) peut agir, est formé sur la partie pouvant pivoter (56).

10. Procédé d'actionnement d'un agencement d'embrayage (30) d'une boîte de vitesses de véhicule automobile (16), en particulier au moyen d'un agencement de commutation (40) selon l'une quelconque des revendications 1 à 9, dans lequel l'agencement d'embrayage (30) est couplé à une tige (42) pouvant se déplacer axialement, dans lequel un arbre de changement de vitesse (60) orienté transversalement à la tige (42) peut être entraîné au moyen d'un moteur électrique (62) dans un premier et dans un deuxième sens de rotation (S, W) et dans lequel une came de changement de vitesse (64) est formée sur l'arbre de changement de vitesse (60), comprenant les étapes suivantes:
- sélectionner l'agencement d'embrayage (30) par rotation de l'arbre de changement de vitesse (60) dans le deuxième sens de rotation (W), sans déplacer axialement ainsi la tige (42), et
- commuter l'agencement d'embrayage (30), en faisant tourner l'arbre de changement de vitesse (60) dans le premier sens de rotation (S), dans lequel la came de changement de vitesse (64) déplace la tige (42) en direction axiale, afin d'engager un rapport de vitesse de l'agencement d'embrayage (30).
